Europäisches Patentamt

European Patent Office

Office européen des brevets

(19)

(11) Publication number: 0 325 095
A2

# (12) EUROPEAN PATENT APPLICATION

(21) Application number: 88850395.0

(51) Int. Cl.⁴: G11B 5/845

(22) Date of filing: 16.11.88

(30) Priority: 20.01.88 US 145868

(43) Date of publication of application:
26.07.89 Bulletin 89/30

(84) Designated Contracting States:
DE FR GB

(71) Applicant: International Business Machines
Corporation
Old Orchard Road
Armonk, N.Y. 10504(US)

(72) Inventor: Crooks, Walter
119 Loma Vista Ct.
Los Gatos, CA 95030(US)
Inventor: Leung, Wai Cheung
6414 Camden Av.
San Jose, CA 95120(US)

(74) Representative: Ekström, Gösta E.
IBM Svenska AB Intellectual Property
Department
S-163 92 Stockholm(SE)

(54) Orienting magnetic particles on a substrate.

(57) A process for aligning magnetic particles on a substrate (3) by applying to the substrate a coating of magnetic particles in a coating medium (4) and subjecting said coating medium to two magnetic fields, one above and one below the medium, with the strengths of the field being matched so that they balance each other at the midpoint of the coating.

EP 0 325 095 A2

FIG. 1

## ORIENTING MAGNETIC PARTICLES ON A SUBSTRATE

The present invention is concerned with a process for orienting magnetic particles on a substrate, such as a magnetic recording medium.

U. S. Patent 4,189,508 teaches an array of magnetic pairs on the front and back of a magnetic disk. However, the magnetic pairs do not face one another. The magnetic field applied by the magnets on the front face is greater than that on the back face. U. S. Patent 4,440,106 teaches methods of applying magnetic particles using magnets on either side of a magnetic recording medium. U. S. Patent 4,580,966 shows the concept of orienting magnetic particles on a disk by use of permanent magnets on either side of the disk. None of these patents, however, discloses the concept of balancing the magnetic fields at the midpoint of the coating.

The present invention is a process for aligning magnetic particles on a substrate, for example, a magnetic recording medium. The process eliminates the unwanted effects of the undesired magnetic components present in the fringe fields used for orienting particles on substrates. These unwanted effects include specifically the formation of "burn marks" and circumferential alignment differences. It has now been found that these difficulties are overcome when, while the substrate is being coated with magnetic particles in a coating medium, the coating medium is subjected to two magnetic fields, one above and one below the medium with the strengths of the field being matched so that they balance each other at the coating midpoint.

There are two means of achieving the balancing of the strength of the fields. In the first method, the Y components are balanced so that their net effect is zero by insuring that the midpoint of the coating is equi-distant from the poles of the top magnet and the poles of the bottom magnet. In order to achieve this and not to have an adverse effect on the performance of the air barrier coater, the top magnets are recessed into the top holding pad by an amount equal to the thickness of the substrate. Excellent uniformity of particle alignment is achieved when the fields are balanced using this method. Additionally, burn marks are eliminated and uniform circumferential orientation is achieved. A still additional advantage is the benefit of reduced application cycle time.

An alternate means of balancing the Y magnetic components is by increasing the current to the coil of the bottom electromagnet, as opposed to the top magnet, by an amount sufficient to insure that the magnetic field seen at the midpoint of the coating from the more distant bottom magnet is equal to the field emanating from the closer top magnet. This method achieves similar results as the previously described method. The first method is, however, preferred and it requires a more simple modification to existing coaters.

An understanding of the invention, which is defined in the attached claims, is facilitated by reference to the accompanying drawings.

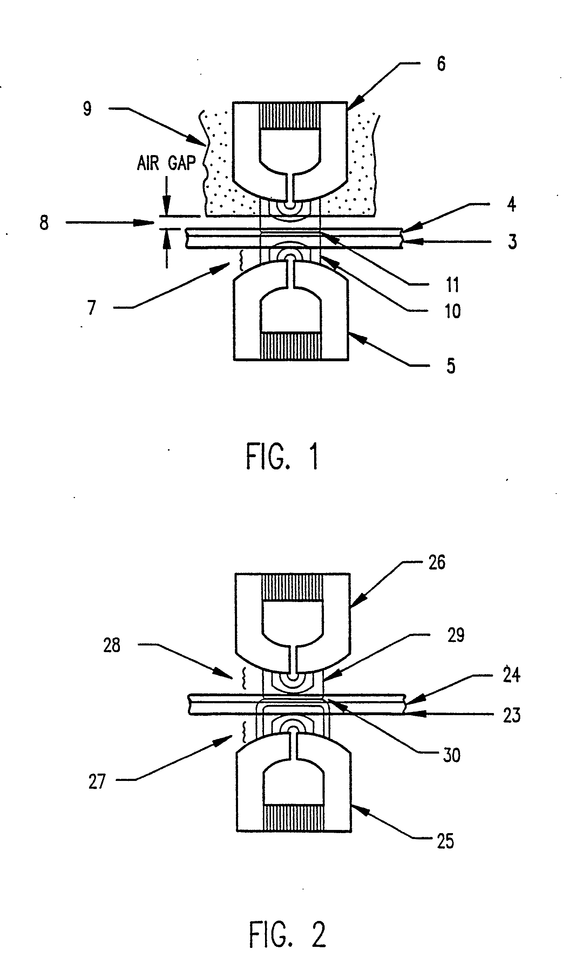

FIGS. 1 and 2 are both schematic cross-sectional representations of equipment useful in the process of the present invention. They are not drawn to scale.

FIG. 1 illustrates the present invention when the top magnet gap setting has been increased by a distance equivalent to the substrate thickness to insure field interface is within the center of the coating. In the figure, a substrate (3) is coated with a particulate coating (4). Typically, the substrate would be about 3.8 mm thick and the coating would be from 1/2 t 1 $\mu$m thick. An electromagnet (5) is at the bottom of the apparatus and another electromagnet (6) is at the top. (7) shows the bottom magnet substrate gap and (8) is the air gap. The top electromagnet (6) is recessed in, for example, an epoxy coating (9) to retain the air gap while increasing magnetic gap. The magnetic forces (10) balance each other in the middle of the particulate coating at (11).

FIG. 2 shows an apparatus in which the current to the bottom electromagnet is increased by the amount required to insure field interface within the center of the coating. In FIG. 2, the substrate is (23) and the particulate coating is (24). (25) shows the bottom electromagnet and (26) shows the top electromagnet. The bottom magnet substrate gap is shown at (27) and the top magnet substrate gap at (28). The magnetic fields (29) balance each other at the center (30) of the coating.

In this invention, the magnetic medium is surfactant treated acicular gamma iron oxide particles, at 25-35% pigment volume concentration in an epoxy-phenolic binder system.

The coating mixture of finely dispersed magnetic particles, each particle being enveloped in surfactant, is applied to the upper surface of a slowly rotating disk on a horizontal air barrier coater. After sufficient coating is applied to ensure that during subsequent steps the surface of the substrate will be covered with the magnetic coating, the coater, which is pre-programmed, enters a pre-spin step to spread the coating uniformly across the whole substrate surface. The substrate next is accelerated into a high speed spin-off step with the top magnet-holding pad in a down position. The rpm is of the order of 3,000-5,000 rpm, depending upon the thickness required, the solids and viscosity of the coating and the helium or gas flow rate. (See U. S. Patent 4,587,139.) The helium or gas glow continues during the high speed spin-off step, being turned off after or during the deceleration step. The magnetic coating is next subjected to horizontal fringe field to align the particles circumferentially.

## Claims

1. A process for aligning magnetic particles on a substrate (3, 23), said process comprising the steps of:

(1) applying to the substrate a coating (4, 24) which comprises magnetic particles in a coating medium; and

(2) subjecting said coating medium to two magnetic fields, one above and one below the medium, with the strengths of the fields being matched so that they balance each other out at the midpoint of the coating.

2. A process as claimed in claim 1 wherein the top magnet gap (8) setting is increased by a distance equivalent to the substrate thickness, thereby insuring the magnetic fields balance each other within the center of the coating.

3. A process as claimed in claim 1 wherein the current to the bottom electromagnet (25) is increased by the amount required to insure that the top and bottom magnetic fields balance each other within the center of the coating.

FIG. 1

FIG. 2